# EUROPÄISCHE PATENTSCHRIFT

(11) **EP 2 791 062 B1**
(45) Veröffentlichungstag und Bekanntmachung des Hinweises auf die Patenterteilung: **13.04.2016**
(21) Anmeldenummer: 12805616.5
(22) Anmeldetag: 23.11.2012
(51) Int. Cl.: C02F 1/02, C02F 1/16, C02F 1/461, F24J 2/46

(54) **VERFAHREN UND SYSTEM ZUR BEREITSTELLUNG VON REINIGUNGSWASSER ZUR REINIGUNG EINER SOLARKRAFTANLAGE SOWIE SOLARKRAFTANLAGE MIT EINEM SOLCHEN SYSTEM**
METHOD AND SYSTEM FOR PROVIDING CLEANING WATER FOR CLEANING A SOLAR POWER INSTALLATION AND SOLAR POWER INSTALLATION COMPRISING SUCH A SYSTEM
PROCÉDÉ ET SYSTÈME DE FOURNITURE D'EAU DE NETTOYAGE DESTINÉE À UNE CENTRALE SOLAIRE ET CENTRALE SOLAIRE POURVUE D'UN TEL SYSTÈME

(30) Priorität: 03.02.2012 DE 102012001999; 29.06.2012 DE 102012211343
(43) Veröffentlichungstag der Anmeldung: 22.10.2014
(73) Patentinhaber: Siemens Aktiengesellschaft, 80333 München (DE)
(72) Erfinder: HAHN, Alexander, 91341 Röttenbach (DE); KÄPPNER, Roland, 97246 Eibelstadt (DE); REINER, Andreas, 91083 Baiersdorf (DE); STRAUB, Jochen, 91054 Erlangen (DE)
(86) Internationale Anmeldenummer: PCT/EP2012/073425
(87) Internationale Veröffentlichungsnummer: WO 2013/113420

(56) Entgegenhaltungen:
- EP-A1- 2 138 678
- DE-A1-102009 023 385
- DE-U1-202008 009 010
- US-A1- 2010 212 654

## Beschreibung

Die Erfindung betrifft ein Verfahren und ein System zur Bereitstellung von Reinigungswasser zur Reinigung einer Solarkraftanlage. Die Erfindung betrifft weiterhin eine Solarkraftanlage mit einem solchen System. Ein solches Verfahren und System gemäß dem Oberbegriff des Hauptansprüche wird z.B. in der Offenlegungsschrift DE 10 2009 023 385 A1 dargestellt.

Im Betrieb von Solarkraftwerken oder -anlagen, wie z.B. Photovoltaik(PV)-Anlagen oder Solar-Thermische Anlagen, treten während des Betriebs immer Verunreinigungen an den Komponenten auf, die zu Wirkungsgradverlusten der gesamten Anlage führen. Die Art und die Menge der Verschmutzung sind zwar standortabhängig, jedoch lassen sich solche Verschmutzungen nicht vermeiden. Die Verunreinigungen können witterungsbedingt sein (z.B. Sand, Staub, Pollen, etc.), von Industrieanwendungen stammen (z.B. Ruß, organische oder anorganische Emissionen, etc.) oder biologischer Natur sein (z.B. Vogelexkremente).

Für gewöhnlich wird eine Solarkraftanlage einer mechanischen Reinigung mit Waschmittel durch Putzkräfte unterzogen. Die Reinigung erfolgt meistens je nach Bedarf, zumindest wenn bereits eine Beeinträchtigung des Betriebs eingetreten ist. Auch spezielle Oberflächenbeschichtungen sind bekannt, um das Anhaften von Schmutzpartikeln zu reduzieren (Lotusblüteneffekt). Diese Beschichtungen wirken allerdings nicht gegen alle Arten von Verunreinigungen gleichermaßen gut und haben oft eine eingeschränkte Wirkungsdauer.

Der Erfindung liegt die Aufgabe zugrunde, eine kostengünstige und wirkungsvolle Reinigung eines Solarkraftwerks zu ermöglichen.

Die Aufgabe wird erfindungsgemäß gelöst durch ein Verfahren zur Bereitstellung von Reinigungswasser zur Reinigung einer Solarkraftanlage, wobei das Reinigungswasser in einer Wasseraufbereitungsanlage aufbereitet wird, die mit der Abwärme einer Elektrolyseanlage betrieben wird.

Die Aufgabe wird weiterhin erfindungsgemäß gelöst durch ein System zur Bereitstellung von Reinigungswasser zur Reinigung einer Solarkraftanlage, umfassend eine Wasseraufbereitungsanlage zur Aufbereitung des Reinigungswassers, wobei die Wasseraufbereitungsanlage thermisch mit einer Elektrolyseanlage gekoppelt ist.

Die Aufgabe wird zudem erfindungsgemäß gelöst durch eine Solarkraftanlage mit einem solchen System umfassend eine Wasseraufbereitungsanlage sowie eine Elektrolyseanlage.

Die im Bezug auf das Verfahren nachfolgend angeführten Vorteile und bevorzugten Ausgestaltungen lassen sich sinngemäß auf das System sowie die Solarkraftanlage übertragen.

Unter Reinigungswasser wird hierbei ein Reinigungsmittel verstanden, welches aufbereitetes, insbesondere entsalztes bzw. destilliertes Wasser enthält oder mit einem derart aufbereiteten Wasser vermischt ist.

Die Erfindung basiert auf der Idee, dass zur Reinigung einer Solarkraftanlage ausreichend Wasser mit sehr guten Reinigungsqualitäten bereitgestellt wird, indem das Wasser aus einer Wasseraufbereitungsanlage verwendet wird, die sich in der Nähe des Standortes der Solarkraftanlage befindet. Die Wasseraufbereitungsanlage ist hierbei Teil eines Systems umfassend zusätzlich eine Elektrolyseanlage, wobei die Wasseraufbereitungsanlage strömungstechnisch und thermisch mit der Elektrolyseanlage gekoppelt ist, indem zumindest ein Teil der Abwärme der Elektrolyseanlage in die Wasseraufbereitungsanlage eingeleitet wird. Der Elektrolyseprozess benötigt ohnehin eine Abführung der Prozesswärme, durch das Einleiten der Abwärme in die Wasseraufbereitungsanlage können somit aufwendige Kühler für die Elektrolyseanlage teilweise oder ganz entfallen. Das aufbereitete Wasser aus der Wasseraufbereitungsanlage wird insbesondere zum Betrieb der Elektrolyseanlage verwendet, daher weist das aufbereitete Wasser einen hohen Reinheitsgrad auf. Das aufbereitete Wasser eignet sich somit auch als Reinigungswasser für die nah befindliche Solarkraftanlage. Somit ist ein gemeinsamer Standortvorteil von Elektrolyse, Wasseraufbereitung und Solarkraftwerk gegeben, da sich aus der Kombination der drei Anlagen ein hoher synergetischer Effekt ergibt.

Durch die insbesondere kontinuierliche Bereitstellung von Reinigungswasser werden die lichtsensitiven Komponenten von Solarkraftanlagen bevorzugt kontinuierlich oder zumindest zyklisch, in regelmäßigen Zeitabständen, die Standort abhängig sind, automatisch gereinigt. Somit wird ein Betrieb des Solarkraftwerks bei einem konstant hohen Wirkungsgrad gewährleistet.

Bevorzugt wird die Elektrolyseanlage mit elektrischem Strom aus der Solarkraftanlage betrieben. Eine elektrische Kopplung der Solarkraftanlage mit einer Elektrolyseanlage ist besonders vorteilhaft, da viele Solaranlagen bzw. -kraftwerke standortbedingt (z.B. in der Wüste) keine erzeugungsgerechten Stromabnehmer haben, und so auf eine Energiespeicherung angewiesen sind, die in diesem Fall im Form einer Wasserstofferzeugung in der Elektrolyseanlage erfolgt.

Als Reinigungswasser wird vorzugsweise entsalztes, bzw. deionisiertes Wasser bereitgestellt. Von besonderer Bedeutung für die Effizienz des Reinigungsvorgangs bei einer Solarkraftanlage ist die Reinigung mit vollentsalztem Wasser, zumindest beim abschließenden Waschvorgang. Dadurch werden Rückstände (z.B. Salze) auf den zu reinigenden Komponenten vermieden, das Wasser verdampft so rückstandsfrei.

Vorteilhafterweise werden dem Reinigungswasser Reinigungszusätze, z.B. Tenside, beigemischt, um die Reinigungseffizienz weiter zu erhöhen.

Als Roh- bzw. Ausgangswasser kommt zweckdienlicherweise Seewasser, Brackwasser, Trinkwasser oder Industrieabwasser in Frage, das in der Wärmeaufbereitungsanlage entsalzt bzw. destilliert wird. Unabhängig davon, aus welcher Quelle das Roh- bzw. Ausgangswasser stammt und wie stark verschmutzt es vor der Aufbereitung ist, nach dem Aufbereitungsschritt weist das aufbereitete Wasser einen sehr hohen Reinheitsgrad auf, der es für die Reinigung von Solarkraftanlagen besonders geeignet macht: insbesondere enthält das Wasser keine Salze, Minerale und organische Substanzen.

Gemäß einer bevorzugten Variante wird in der Wasseraufbereitungsanlage eine thermische Wasseraufbereitung durchgeführt. Der entscheidende Vorteil ist hierbei, dass die im Elektrolyseur anfallende Abwärme deutlich größer ist als die für die Wärmeaufbereitungsanlage erforderliche Menge an Wärme. Auf diese Weise wird der Bedarf an Wasser für den Elektrolyseprozess durch die Wärmeaufbereitungsanlage überkompensiert, so dass parallel entsalztes bzw. destilliertes Wasser auch für die Reinigung der Solarkraftanlage und ggf. für weitere Prozesse hergestellt wird.

Nach einer bevorzugten Ausführung wird in der Wasseraufbereitungsanlage bevorzugt Niedertemperatur-Destillation zur Herstellung von deionisiertem Wasser angewendet. Der auf Verdunstung (d.h. der Prozess findet unterhalb der Siedetemperatur statt) und Rekondensation basierende Prozess ist z.B. in der DE 10 2008 051 731 A1 beschrieben.

Nach einer alternativen, bevorzugten Ausführung wird in der Wasseraufbereitungsanlage zur Herstellung von deionisiertem Wasser Membran-Destillation angewendet. Die Membran-Destillation ist ein thermisch betriebener Separationsprozess, bei dem eine hydrophobe Membran eine Barriere für die flüssige Phase eines Wasserstroms darstellt, während die dampfförmige Phase die Membran durchdringt. Die treibende Kraft für den Prozess bildet ein Partialdampfdruckgefälle, welches üblicherweise durch eine Temperaturdifferenz hervorgerufen wird.

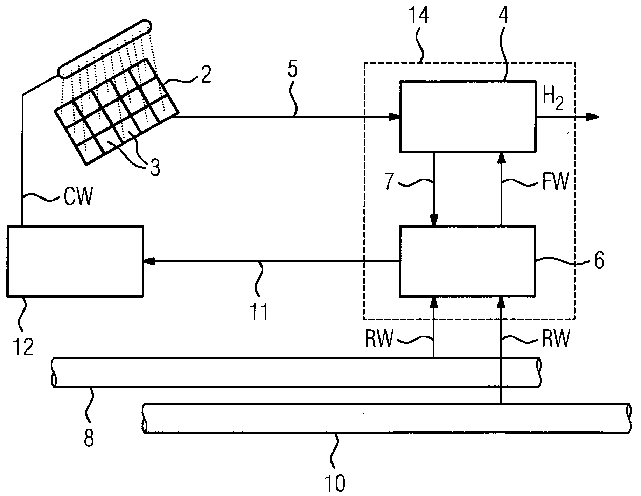

Ein Ausführungsbeispiel der Erfindung wird anhand einer Zeichnung näher erläutert. Hierin zeigt die einzige Figur eine Solarkraftanlage 2, die eine Photovoltaik-Anlage ist und mehrere Photovoltaik(PV)-Zellen 3 umfasst. Die Solarkraftanlage 2 ist elektrisch mit einer Elektrolyseanlage 4 zur Herstellung von Wasserstoff H₂ gekoppelt, angedeutet durch den Pfeil 5. Dies bedeutet, dass die Elektrolyseanlage 4 zumindest teilweise oder zeitweise mit elektrischem Strom aus der Solarkraftanlage 2 betrieben wird.

Die thermische Energie bzw. Abwärme der Elektrolyseanlage 4 wird einer Wasseraufbereitungsanlage 6 zugeführt, welcher Vorgang in der Figur durch den Pfeil 7 veranschaulicht ist. Auch die Wasseraufbereitungsanlage 6 wird bevorzugt mit elektrischer Energie aus der Solarkraftanlage 2 betrieben. Über eine Seewasser-Leitung 8 und eine Abwasser-Leitung 10 wird in die Wasseraufbereitungsanlage 6 Rohwasser RW zum Aufbereiten eingeleitet. Das Rohwasser RW kann z.B. Seewasser, Brackwasser oder Trinkwasser sein. Die Rohwasserversorgung ist dabei optimal an die Wasserressourcen der Gegend angepasst. In die Wasseraufbereitungsanlage 6 wird im gezeigten Ausführungsbeispiel eine Niedertemperaturdestillation durchgeführt, bei der das Rohwasser RW thermisch bei einer Betriebstemperatur unterhalb der Siedetemperatur aufbereitet wird, wobei die thermische Energie für den Aufbereitungsvorgang aus der Elektrolyseanlage 4 kommt.

Ein Teil des vollentsalzten Frischwassers FW aus der Wasseraufbereitungsanlage 6 wird im gezeigten Ausführungsbeispiel der Elektrolyseanlage 4 zugeführt. Insbesondere wird der komplette Bedarf an Frischwasser FW für die Elektrolyseprozess durch destilliertes Wasser aus der Wasseraufbereitungsanlage 6 gedeckt.

Ein anderer Teil des aufbereiteten, vollentsalzten Wassers wird über eine Leitung 11 einer Reinigungsvorrichtung 12 zugeführt und als Reinigungswasser CW zur Reinigung der Solarkraftanlage 2 verwendet. In der Reinigungsvorrichtung 12 können dem Reinigungswasser CW zur Verbesserung seiner Eigenschaften Reinigungssätze wie z.B. Tenside beigemischt werden. Die Reinigung der PV-Solarkraftanlage 2 erfolgt insbesondere automatisch und in regelmäßigen Zeitabständen. Alternativ wird die Solarkraftanlage 2 kontinuierlich gereinigt.

Die Elektrolyseanlage 4 und die Wasseraufbereitungsanlage 6 bilden somit ein System 14 zur Bereitstellung von Reinigungswasser zur Reinigung der Solarkraftanlage 4.

In der Figur ist eine Lösung des Verschmutzungsproblems und der damit einhergehenden Wirkungsgradverluste von einer Solarkraftanlage 2 mit PV-Zellen 3 gezeigt. Die Kombination von der PV-Anlage 2 mit einer Elektrolyseanlage 4 und angekoppelter Wasseraufbereitung ist aus mehreren Gründen besonders wirtschaftlich: zum einen steht dem PV-Anlagenbetreiber ein Energiespeicher (die Elektrolyseanlage 4) zur Verfügung, zum anderen reicht das Abwärmeniveau der Elektrolyseanlage 4 aus, um in modernen Destillationsverfahren (Niedertemperaturdestillation, Membrandestillation), die bereits unter 100°C arbeiten, ausreichend vollentsalztes Wasser für die Reinigung der PV-Zellen 3 zu generieren.

Der elektrische Wirkungsgrad einer Elektrolyseanlage liegt typischerweise zwischen 50 % und 80 %. Dies bedeutet für eine 1MW-Elektrolyseanlage eine Wärmeproduktion in der Größenordnung zwischen 200 und 500 kW. Moderne thermische Wasseraufbereitungsverfahren (z.B. Niedertemperaturdestillation) benötigen zur Herstellung von entmineralisiertem Wasser ca. 0,25 kWh/l (der interne Verbrauch von elektrischer Energie - hauptsächlich Pumpenleistung - wird nicht berücksichtigt).

Übertragen auf das Ausführungsbeispiel gemäß der oben beschriebenen Figur bedeutet dies, dass unter Nutzung des Abwärmestromes der Elektrolyseanlage (4) sich in der Wasseraufbereitungsanlage 6 bis zu 2000 1 pro Stunde entsalztes Wasser produzieren lassen. Berücksichtigt man die Tatsache, dass für den Betrieb einer 1MW-Elektrolyseanlage ca. 200 1/h entsalztes Frischwasser benötigen werden, ergibt sich ein Überschuss an aufbereitetem Wasser in der Größenordnung von 90 %. Dieser Überschuss kann u. a. zur Reinigung der PV-Zellen verwendet werden und steigert damit die Effizienz des Gesamtsystems.

## Patentansprüche

1. Verfahren zur Bereitstellung von Reinigungswasser (CW) zur Reinigung einer Solarkraftanlage (2), wobei das Reinigungswasser (CW) in einer Wasseraufbereitungsanlage (6) aufbereitet wird, **dadurch gekennzeichnet, dass** die Wasseraufbereitungsanlage mit der Abwärme einer Elektrolyseanlage (4) betrieben wird.

2. Verfahren nach Anspruch 1,
wobei die Elektrolyseanlage (4) mit elektrischem Strom aus der Solarkraftanlage (2) betrieben wird.

3. Verfahren nach einem der vorhergehenden Ansprüche,
wobei als Reinigungswasser (CW) ein entsalztes, insbesondere destilliertes Wasser verwendet wird.

4. Verfahren nach einem der vorhergehenden Ansprüche,
wobei dem Reinigungswasser (CW) Reinigungszusätze zugeführt werden.

5. Verfahren nach einem der vorhergehenden Ansprüche,
wobei in der Wasseraufbereitungsanlage (6) Seewasser, Brackwasser, Industrieabwasser oder Trinkwasser zu Reinigungswasser (CW) aufbereitet wird.

6. Verfahren nach einem der vorhergehenden Ansprüche,
wobei in der Wasseraufbereitungsanlage (6) eine thermische Wasseraufbereitung durchgeführt wird.

7. Verfahren nach einem der vorhergehenden Ansprüche,
wobei in der Wasseraufbereitungsanlage (6) eine Niedertemperaturdestillation angewendet wird.

8. Verfahren nach einem der vorhergehenden Ansprüche,
wobei in der Wasseraufbereitungsanlage (6) eine Membrandestillation angewendet wird.

9. System (14) zur Bereitstellung von Reinigungswasser (CW) zur Reinigung einer Solarkraftanlage (2), umfassend eine Wasseraufbereitungsanlage (6) zur Aufbereitung des Reinigungswassers(CW), **dadurch gekennzeichnet dass** die Wasseraufbereitungsanlage (6) thermisch mit einer Elektrolyseanlage (4) gekoppelt ist.

10. Solarkraftanlage (2) mit einem System (14) umfassend eine Wasseraufbereitungsanlage (6) und eine Elektrolyseanlage (4) nach Anspruch 9.

11. Solarkraftanlage (2) nach Anspruch 10,
wobei die Solarkraftanlage (2) elektrisch mit der Elektrolyseanlage (4) gekoppelt ist.

12. Solarkraftanlage (2) nach einem der Ansprüche 10 oder 11, die eine Photovoltaik-Anlage ist.

13. Solarkraftanlage (2) nach einem der Ansprüche 10 oder 11, die eine solarthermische Anlage ist.

## Claims

1. Method for providing cleaning water (CW) for cleaning a solar power installation (2), wherein the cleaning water (CW) is treated in a water treatment installation (6),
**characterised in that** the water treatment installation is operated with the waste heat of an electrolysis system (4).

2. Method according to claim 1,
wherein the electrolysis system (4) is operated with electricity from the solar power installation (2).

3. Method according to one of the preceding claims,
wherein desalinated, in particular distilled, water is used as cleaning water (CW).

4. Method according to one of the preceding claims,
wherein cleaning additives are fed to the cleaning water (CW).

5. Method according to one of the preceding claims,
wherein sea water, brackish water, industrial waste water or drinking water is treated to produce cleaning water (CW) in the water treatment installation (6).

6. Method according to one of the preceding claims,
wherein thermal water treatment is carried out in the water treatment installation (6).

7. Method according to one of the preceding claims,
wherein low temperature distillation is applied in the water treatment installation (6).

8. Method according to one of the preceding claims,
wherein membrane distillation is applied in the water treatment installation (6).

9. System (14) for providing cleaning water (CW) for cleaning a solar power installation (2), comprising a water treatment installation (6) for treating the cleaning water (CW),
**characterised in that** the water treatment installation (6) is thermally coupled to an electrolysis system (4).

10. Solar power installation (2) having a system (14) comprising a water treatment installation (6) and an electrolysis system (4) according to claim 9.

11. Solar power installation (2) according to claim 10,
wherein the solar power installation (2) is electrically coupled to the electrolysis system (4).

12. Solar power installation (2) according to one of claims 10 or 11, which is a photovoltaic installation.

13. Solar power installation (2) according to one of claims 10 or 11, which is a solar thermal installation.

## Revendications

1. Procédé de mise à disposition d'eau (CW) de nettoyage d'une centrale (2) solaire, l'eau (CW) de nettoyage étant traitée dans une installation (6) de traitement de l'eau, **caractérisé en ce que** l'on fait fonctionner l'installation de traitement de l'eau avec la chaleur perdue d'une installation (4) d'électrolyse.

2. Procédé suivant la revendication 1,
dans lequel on fait fonctionner l'installation (4) d'électrolyse avec du courant électrique provenant de la centrale (2) solaire.

3. Procédé suivant l'une des revendications précédentes,
dans lequel on utilise comme eau (CW) de nettoyage une eau déminéralisée, notamment distillée.

4. Procédé suivant l'une des revendications précédentes,
dans lequel on ajoute des additifs de nettoyage à l'eau (CW) de nettoyage.

5. Procédé suivant l'une des revendications précédentes,
dans lequel on transforme dans l'installation (6) de traitement de l'eau de l'eau de mer, de l'eau saumâtre, des eaux usées industrielles ou de l'eau potable en de l'eau (CW) de nettoyage.

6. Procédé suivant l'une des revendications précédentes,
dans lequel on effectue un traitement thermique de l'eau dans l'installation (6) de traitement de l'eau.

7. Procédé suivant l'une des revendications précédentes,
dans lequel on utilise une distillation à base température dans l'installation (6) de traitement de l'eau.

8. Procédé suivant l'une des revendications précédentes,
dans lequel on utilise une distillation par membrane dans l'installation (6) de traitement de l'eau.

9. Système (14) de mise à disposition d'eau (CW) de nettoyage pour le nettoyage d'une centrale (2) solaire, comprenant une installation (6) de traitement de l'eau pour traiter de l'eau (CW) de nettoyage, **caractérisé en ce que** l'installation (6) de traitement de l'eau est couplée thermiquement à une installation (4) d'électrolyse.

10. Centrale (2) solaire ayant un système (14) comprenant une installation (6) de traitement de l'eau, une installation (4) d'électrolyse suivant la revendication 9.

11. Centrale (2) solaire suivant la revendication 10,
dans laquelle la centrale (2) solaire est couplée électriquement à l'installation (4) d'électrolyse.

12. Centrale (2) solaire suivant l'une des revendications 10 ou 11,
qui est une installation photovoltaïque.

13. Centrale (2) solaire suivant l'une des revendications 10 ou 11,
qui est une installation de la thermique solaire.
